# EUROPEAN PATENT APPLICATION

(11) **EP 4 755 666 A1**
(43) Date of publication of application: **10.06.2026**
(21) Application number: 25220014.2
(22) Date of filing: 02.12.2025
(51) Int. Cl.: B60C 25/05, B60C 25/138

(54) **APPARATUS AND METHOD FOR FITTING AND REMOVING A TYRE**

(30) Priority: 04.12.2024 IT 202400027444
(71) Applicant: NEXION S.p.A., 42015 Correggio (RE) (IT)
(72) Inventor: SCILLI, Francesco, 42015 CORREGGIO (REGGIO EMILIA) (IT); DELL'UNIVERSITA', Gianfranco, 42015 CORREGGIO (REGGIO EMILIA) (IT)
(74) Representative: Conti, Marco

(57) **Abstract**

An apparatus (1) for fitting and removing a tyre (2) to and from a corresponding rim (3) of a wheel (4) for a vehicle, comprises: a wheel-holder unit (6) rotating about a first axis (A) which is vertically oriented, a column (8), having a vertical guide (10), a carriage (11), coupled to the vertical guide (10) to slide vertically, an arm (15) connected to the carriage (11); the apparatus (1) also comprises an operating head (16), pivotally connected to the arm (15), to rotate around a second axis (B), transversal to the first axis (A), and provided with a plurality of tools (18); each tool is operatively inserted between a bead of the tyre (2) and an annular edge of the rim (3) in a working position; the tools (18) are alternatively selectable by rotating the operating head (16) in respective operating configurations in which the tools (18) are oriented towards the wheel (4) to be positioned in the working position; the apparatus (1) comprises an illuminator (100), configured to generate a laser beam (101); the illuminator (100) is connected to the arm (15) or to the operating head (16) so that the laser beam (101) is oriented in a downward direction, for illuminating a spot of the wheel (4) mounted on the wheel holder unit (6). [FIGURE 1]

## Description

This invention relates to an apparatus and a method for fitting and removing a tyre.

To remove and later fit a tyre to and from a wheel rim, tyre changing machines equipped with numerous tools are known in the prior art. The tools are configured to come into operative contact with the tyre in order to perform the required operations. Tyre changing machines of a known typology are described, for example, in documents US2020324590 and US2013206341. Further known solutions provide tyre changing machines wherein each tool comprises its own movement system. The presence of multiple movement systems, however, limits both the field of vision and the freedom of movement of the operator. Furthermore, the multiplicity of movement systems considerably increases the overall dimensions of the tyre changing machines, resulting in a rather complex structure. The complexity of the machines raises production and maintenance costs. Moreover, the greater complexity makes the machines more difficult for the operator to use, to the detriment of reliability, with a higher risk of error and lower precision.

To overcome this problem, solutions such as that described in patent documents EP2962876 and CN110126558 are known, where the tyre changing machine comprises a rotating operating head. The operating head supports three tools (a bead breaker tool, a removing tool and a fitting tool, mounted at 120° from each other) so as to be selectively and alternatively positionable in the operating position by rotating the operating head.

Machines of this kind, however, have inherent disadvantages because they do not allow the tyre to be fitted and removed easily and effectively and do not offer convenience and time-saving capabilities for the operator. Even if the solution with the rotating operating head does considerably reduce overall dimensions, the tools the operating head is equipped with still come into operative contact with the tyre. Thus, the rotating operating head must be positioned in an operating zone close to the zone where the wheel is positioned, making it more awkward to move the tyre and/or the rim when the tyre and/or the rim are being loaded and unloaded onto and from the wheel-holder unit.

Moreover, positioning and/or moving the tools may be done manually by the operator. In this case, there are aiding systems known in the prior art to assist users in positioning the tools relative to the wheel mounted on the wheel-holder unit, so as to position the tool relative to the tyre at the position required for the specific operation to be performed. For example, documents US2019315166, US8284390 and EP4275924 describe an aiding system comprising sensors capable of detecting a series of geometric parameters relating to the tyre and/or rim, such as, for example, diameter, thickness and height. These parameters may also be acquired in the form of three-dimensional images. In the documents cited above, the parameters detected are sent to a processing unit which is configured to drive the actuators which move a working unit, which supports the tools, as a function of the data acquired. Alternatively, the parameters detected may assist the operator only as a visual indication to make manual positioning easier. Further document EP3075577 show an emitter connected to the column of the tyre changing machine. The sensor systems described have the disadvantage of occupying additional space in a working zone which, as already mentioned, is quite limited, which in turn means that there is little room to manoeuvre when the operator has to move the wheel.

Moreover, the sensor systems described in the prior art documents are not always reliable and precise in providing the indications needed to correctly position the tool and the wheel relative to each other. Indeed, the tyre changing machine may be subjected to significant bending stress. This stress is the result of the forces which are created between tool and tyre when the tyre is removed and fitted, and which are discharged on the machine. Such bending may alter the measurement or indication provided by the sensor system, making it unstable or unreliable. It should be noted that the greater the distance between an indicator of the sensor system (for example, a laser indicator) and the tool, the greater the effect that bending has and the greater the imprecision of the indication.

This disclosure has for an aim to provide an apparatus and a method for fitting and removing a tyre to overcome the above mentioned drawbacks of the prior art.

In particular, the aim of this disclosure is to provide an apparatus and a method for fitting and removing a tyre, capable of increasing the manoeuvring space to make it easier for the operator to move the tyre and/or the wheel rim.

Another aim of this disclosure is to provide a positioning aid sensor system to make fitting operations convenient, practical, quick and precise. In particular, the positioning aid sensor system must allow the mutual operating position between tool and tyre in the working area to be detected correctly and reliably.

These aims are fully achieved by the apparatus and method of this disclosure as characterized in the appended claims.

In particular, this disclosure provides an apparatus for fitting and removing a tyre. The apparatus comprises a wheel-holder unit. The wheel-holder unit is configured to rotate about a first axis. The first axis is oriented vertically. The apparatus comprises a column. The column is provided with a vertical guide. The apparatus comprises a carriage. The carriage is coupled to the vertical guide. The carriage is configured to slide vertically along the vertical guide. The apparatus comprises an arm. The arm is connected to the carriage. The apparatus comprises an operating head. The operating head is pivotally connected to the arm. The operating head is configured to rotate about a second axis. The second axis is transversal to the first axis. The operating head is provided with a plurality of tools. Each tool is operatively inserted between a bead of the tyre and an annular edge of the rim in a working position. Each tool which is not operatively inserted between the bead of the tyre and the annular edge of the rim is in a disengaged position. The tools are alternatively selectable by rotating the operating head in respective operating configurations. In the respective operating configurations, the tools are positioned in the working position. In an example, the plurality of tools includes a bead-breaker tool, a removing tool and a fitting tool. Preferably, said tools are angularly spaced by 120° from each other. In an example, in the working position, the tools are operatively oriented towards the wheel, mounted on the wheel-holder unit.

In an example, the operating head and the wheel-holder unit are mutually movable. In an example, the operating head and/or the wheel-holder unit are movable relative to a longitudinal axis. The longitudinal axis is perpendicular to the first axis.

In an example, the arm extends along a transversal direction. In an example, the transversal direction is a direction parallel to the floor. The second axis may be parallel to the transversal direction. In an example, the transversal direction coincides with the second axis. Alternatively, the second axis may be perpendicular to the transversal direction. It should be noted that in this solution, the axis of rotation of the operating head is perpendicular to the direction of extension of the arm.

In an example, the arm is connected movably to the carriage so that it can be moved between an active position and an inactive position. In the active position, the arm is oriented towards the first axis. In the inactive position, the arm is spaced from the active position, away from the first axis. This solution allows the arm to be moved as a function of the operations to be carried out. When a user has to perform the operations necessary to fit and remove the tyre to and from the rim, the tools needed are those in the operating position, oriented towards the wheel. When the user needs more space to move the wheel (or its rim), for example, to place it on the wheel-holder unit or to remove it from the wheel-holder unit, the arm may be unlocked and moved into a position further away so as to create more space.

In an example, the arm is hinged to the carriage. The arm may be moved between the active position and the inactive position by rotating it about a third axis. The third axis is parallel to the first axis. This solution makes it easy and effective to move the arm which, as it rotates about the third axis, remains oriented in the same way relative to the second axis.

In an example, the arm is configured to move in a horizontal plane by rotating about the third axis. By "horizontal plane" is meant a plane which is parallel to the floor.

In an example, the apparatus comprises an elastic element. The elastic element is connected to the carriage. The elastic element is configured to force the arm into the inactive position. That way, the arm, connected to the elastic element, is forced to open automatically, moving from the active position to the inactive position.

In an example, the elastic element is a torsion spring. The torsion spring is able to keep the arm effectively in the "normally inactive" position.

In an example, the apparatus includes at least one locking mechanism. The at least one locking mechanism is configured to lock the arm in the active position. The locking mechanism is configured to unlock the arm from the active position, allowing it to move from the active to the inactive position. This solution allows the arm to be locked in the active position. In effect, without the locking mechanism, the arm would be forced to open and would be unable to stop in the active position in which the tools can operate in contact with the tyre. Furthermore, the locking mechanism is configured to overcome a force which the elastic element tends to exert on the arm, forcing it into the inactive position.

In an example, the apparatus includes two locking mechanisms, positioned one above the other with respect to a vertical direction. The locking mechanisms may be aligned with respect to the vertical direction. In other words, it may be functional to align the locking mechanisms in such a way that they are overlaid when viewed from above. This solution allows locking the arm to the carriage in a stronger and more balanced manner.

In an example, the locking mechanism comprises a locking member. The locking member is movable between a locking position and a releasing position. The locking member comprises a manoeuvring member. The manoeuvring member is connected to the locking member. This solution allows the arm to be manually locked and unlocked quickly and easily.

In an example, the locking mechanism includes a lever. The lever is hinged to the arm. The lever has a first end and a second end. The locking member is connected to the first end. The manoeuvring member includes a handle. The handle is connected to the second end. This solution makes it easier for the user to manually grip and move the locking mechanism. In effect, in an example, the movement of the arm from the inactive position to the active position is performed manually by the operator. In another example, this movement is performed automatically by means of an actuator.

In an example, the carriage includes a cavity. The locking member comprises a hook. The hook is configured to be removably inserted into the cavity so as to lock the arm in the active position. This solution allows the arm to be locked using a safe and reliable hooking system.

In an example, the operating head is removably connected to the arm. This solution allows the operating head to be moved from the arm when the tools or the operating head itself need to be replaced or for maintenance purposes.

In an example, the operating head includes a connecting shaft. The connecting shaft can be removably inserted into the arm. In particular, the connecting shaft can be removably inserted into the arm through an opening made in the arm. The apparatus comprises a fastening pin. The fastening pin can be removably inserted into a through hole to engage the arm and the connecting shaft of the operating head. This solution allows the operating head to be fixed to the arm and removed when necessary.

The apparatus comprises a frame. The frame may support the wheel-holder unit. In an example, the wheel-holder unit is mounted on the frame. The wheel-holder unit protrudes upwardly from the frame. The frame has a working side facing a working area. The working area is a space which is occupiable by the user of the apparatus. The column has a working side facing the working area. In an example, the vertical guide is positioned at the working side of the column. The apparatus comprises a set of pedals. The set of pedals is positioned at the working side of the frame or in proximity thereto. In an example, the pedals transmit wireless signals to corresponding actuators; alternatively, the pedals are connected to the actuators by means of tubes or signal cables. In an example, the set of pedals may be coupled to the working side of the frame.

This solution allows creating, inside the apparatus, a limited physical space corresponding to the working position in which the user can operate. Furthermore, the position of the set of pedals inside the working area allows the user to manoeuvre not only the operating head and/or the locking mechanism but also the set of pedals without moving from the working position. That way, the user need not move around the apparatus to carry out different operations. Consequently, the user takes less time to fit and remove the tyres and can do so more efficiently.

In an example, the frame supports the column. In an example, the frame is provided with a horizontal guide. The horizontal guide supports the column. The column is slidable along the horizontal guide along a sliding direction. The sliding direction is a horizontal direction. The horizontal direction, defined by the horizontal guide, is a direction of the column towards and away from the wheel-holder unit. This solution allows providing the operating head with a further degree of freedom. In particular, this solution allows moving the operating head, hence the tools, towards and away from the wheel-holder unit. This may be useful both for precision operations once the tool is in proximity to the wheel, and for moving the operating head away from the working zone and making it easier for the user to move the wheel. It should be noted that, for safety reasons, the movement of the column along the horizontal guide cannot be a very fast movement. Moreover, when the tyres to be changed are of the same kind (for example, the wheels of a motor car), it is convenient to leave the column in the same position and to disengage the arm so as to give the user more room to move the wheel. Disengaging the arm takes less time (and less energy) than moving the column.

In an example, the column is fixed and the horizontal guide is configured to support and guide the wheel-holder unit towards and away from the column. This solution similarly allows ensuring the mutual, towards/away movement between the wheel-holder unit and the tools.

In an example, the connecting shaft is mounted slidably inside the opening made in the arm. The connecting shaft is capable of sliding in translation relative to the arm along the horizontal direction towards and away from the wheel-holder unit. This solution makes it possible to keep the column fixed while still allowing the tools to be moved horizontally towards or away from the wheel.

In an example, the apparatus comprises a control panel. The control panel is positioned in the working area. The control panel is configured to control the movement of the carriage along the vertical guide. This solution allows manually controlling the movement of the carriage along the vertical guide. Furthermore, the user may perform this operation while remaining still in the space delimited by the working area.

In an example, the apparatus comprises an illuminator. The illuminator is configured to generate a laser beam. The illuminator may be connected to the arm. Alternatively, the illuminator may be connected to the operating head. The laser beam is oriented in a downward direction. Preferably, the laser beam is oriented along a direction parallel to the first axis. This solution allows illuminating a spot of the wheel mounted on the wheel holder unit so as to assist the user in positioning the tool in proximity to the wheel.

In an example, the transversal direction is parallel to the second axis. The operating head is interposed between the illuminator and the arm, along the transversal direction. This solution allows the illuminator to be positioned in such a way that the tools do not interfere with the propagation of the laser beam. In other words, the laser beam path is not obstructed and the light of the laser can freely illuminate a spot on the wheel.

In an example, the operating head is provided with a through hole. The through hole is oriented along the second axis. The through hole may be oriented along the transversal direction. The illuminator is connected to the arm by a stem. The stem is positioned in the through hole. Preferably, the stem is coaxial with the through hole. The operating head is rotatable freely with respect to the stem. The illuminator is stationary with respect to the rotation of the operating head. This solution allows the illuminator and the arm to be rigidly connected while keeping the operating head interposed between them. At the same time, this solution allows the operating head to rotate freely. In an example, the operating head may be locked in the predefined angular positions corresponding to those for which a tool is in the operating configuration. In other terms, the operating head may be provided with a quick locking/unlocking system which allows the tools to be positioned in the direction of the wheel (that is, to be oriented vertically) and to remain stable with that orientation.

In an example, the illuminator, with respect to the second axis, has a radial size exceeding the radial size of the through hole. The illuminator is removably connected to the stem. This solution allows removing the illuminator from the stem. That way, the operating head can also be removed by sliding it off the stem. Alternatively, the operating head can be removed after both the illuminator and the stem have been removed. It should be noted that should the radial size of the illuminator with respect to the second axis be smaller than the radial size of the through hole, it would be possible for the operating head to be slid off without removing the illuminator.

In an example, the apparatus comprises the connecting shaft. The connecting shaft has a first end and a second end. The first end is connected to the arm. The second end is connected rotatably to the operating head. The stem is fixed to the second end of the connecting shaft. The connecting shaft is provided with a seat oriented radially with respect to the second axis. In an example, the arm is provided with a through hole. The through hole of the arm is oriented radially with respect to the second axis. The connecting shaft is connected removably to the arm in a predetermined relative angular position. The through hole of the arm is aligned with the seat of the connecting shaft. The apparatus comprises a fastening pin. The fastening pin is slidably coupled to the through hole of the arm. That way, the fastening pin can be inserted removably into the seat of the connecting shaft. This solution allows effectively locking and unlocking the connecting shaft with respect to the arm, thus enabling the operating head to be removed from (and fitted to) the arm.

In an example, the illuminator is positioned coaxially with respect to the second axis. The illuminator is removably connected to the operating head. The operating head includes a seat. The illuminator is connectable to the seat of the operating head in a plurality of angular positions. This solution allows removing and inserting the illuminator in different positions. In this example, the illuminator rotates as one with the operating head. Thus, following a rotation of the operating head, the laser beam from the illuminator is not oriented towards the wheel. It is therefore necessary to remove the illuminator and to couple it to the operating head again, in a different angular position to allow the laser beam to be oriented towards the wheel. In another example, the illuminator is pivotally connected to the operating head. The illuminator is rotatable with respect to the operating head. This solution allows the illuminator to remain coupled to the operating head, while at the same time ensuring their mutual, free rotation.

That way, following a rotation of the operating head, the illuminator has not rotated and keeps the laser beam oriented towards the wheel.

In an example, the laser beam is oriented vertically.

In an example, the apparatus comprises one or more actuators. The one or more actuators are configured for moving the carriage along the vertical guide. The apparatus comprises a control unit. The control unit is connected to the actuator. In an example, the control unit is configured for setting a first sliding speed or a second sliding speed of the carriage. The second sliding speed is greater than the first sliding speed. Preferably, the second sliding speed is twice the first sliding speed. In an example, the control unit is programmed to pass from the first to the second sliding speed automatically. In an example, the passage from the first to the second sliding speed occurs after the carriage has been moving at the first speed for a predetermined length of time.

In an example, the control panel comprises one or more control elements. The one or more control elements are connected to the control unit to deliver commands to the control unit. The control elements are configured to interact with a user so that the user can deliver commands for the actuator and select the first sliding speed or the second sliding speed. Preferably, the control elements comprise at least one joystick. Alternatively, or in combination with each other, the control elements comprise keys, or a touchpad control, or other device configured to be operated directly by the user, and in communication with the control unit.

In an example, the control unit is configured for setting a predetermined stroke for the carriage. The control unit is connected to the actuators so as to make the carriage perform a movement of predetermined length. The control elements are configured to interact with a user so that the user can deliver commands for the actuator and move the carriage for the predetermined stroke. This solution allows precisely controlling the movement of the tool towards the wheel. Indeed, by setting short strokes of predetermined length, the tool can be gradually stepped towards the wheel. Without this possibility, if the tool were moved manually towards the wheel in a stepless manner, the user would be more likely to be less precise in positioning the tool, with the risk of bringing the tool into contact with the wheel rim.

In an example, the apparatus comprises a further column. The further column is separate from the column. The apparatus comprises a bead pressing tool. The bead pressing tool is configured to be operatively in contact with the wheel. The bead pressing tool is adapted to rotate as one with the wheel while exerting a force on the tyre parallel to the first axis. The bead pressing tool is connected to the further column. This solution allows the tool to be mounted on a support other than the column. It should be noted that, operatively, the bead pressing tool exerts a force on the tyre (and vice versa) when it is in contact therewith. If the bead pressing tool were mounted on the column, the force would be discharged to the column, causing it to bend. The bending of the column would lead to a change in the direction of the laser beam, thereby diminishing the precision and efficacy of the illuminator.

In an example, the apparatus comprises a sensor system. The sensor system is configured for detecting the tool of the plurality of tools that is positioned in the operating configuration. This solution allows the control unit and the operator to know exactly the position of the tools relative to an absolute reference, as a function of the rotation of the operating head.

According to an aspect of it, this disclosure provides a method for fitting and removing a tyre to and from a corresponding rim of a vehicle wheel. The method comprises a step of providing a wheel-holder unit. The wheel-holder unit is rotatable about a first axis which is oriented vertically. The method comprises a step of locking the wheel on the wheel-holder unit. The method comprises a step of providing a column which has a vertical guide. The method comprises a step of providing a carriage which is slidably coupled to the column. The method comprises a step of providing an arm connected to the carriage. The method comprises a step of providing an operating head connected to the arm. The operating head is rotatable about a second axis which is transversal to the first axis. The operating head includes a plurality of tools. The method comprises a step of selecting one of the tools of the plurality of tools by rotating the operating head about the second axis. The method comprises a step of inserting the selected tool between a bead of the tyre and an annular edge of the rim in a working position by vertically moving the arm. The method comprises a step of fitting the tyre to the rim by rotating the wheel-holder unit about the first axis. The method comprises a step of removing the tyre from the rim by rotating the wheel-holder unit about the first axis.

In an example, the method comprises a step of moving the arm from an active position, where the arm is oriented towards the first axis, to an inactive position, spaced from the active position. In an example, the method comprises an initial step in which the arm is in the inactive position. The arm is oriented towards the wheel, that is to say, the arm is not placed in the active position until the wheel has been positioned on (and fixed to) the wheel-holder unit. That way, the steps of the method give the operator the space needed to position and remove the wheel onto and from the wheel-holder unit.

In an example, the arm extends along the second axis from a first end to a second end. The operating head is connected to the arm at the second end. The arm is hinged to the carriage at the first end so that the arm moves relative to the carriage between the active position and the inactive position with a rotational movement around a third axis which is parallel to the first axis.

In an example, the method comprises a step of providing an illuminator capable of generating a laser beam. The illuminator may be connected to the operating head or to the arm. The method may also comprise a step of positioning the selected tool in the working position, using the laser beam as reference on the wheel.

In an example, the method comprises a step in which the illuminator is removably connected to the arm so that the operating head can be rotated to select the tool without rotating the illuminator.

The method may also include a step of prepositioning a tool of the plurality of tools. The step of prepositioning the tool comprises keeping the operating head at a higher up position with respect to the vertical extension of the vertical guide and the column. The step of prepositioning comprises moving the tool horizontally towards or away from the first axis, using the laser beam as vertical reference. Once positioned horizontally, the tool may be lowered vertically along the vertical guide towards the wheel mounted on the wheel-holder unit. It should be noted that the movements of the tools may be controlled by the operator using the control elements on the control panel, or they may be performed automatically. In the case of operations performed automatically, an emergency system is preferably provided to allow the operator to interrupt the operations if something goes wrong.

This disclosure relates to tyre changing apparatuses called "light-duty" apparatuses, in which the axis of rotation of the wheel-holder unit (the first axis) is substantially vertical. It should be noted that the principles of this disclosure are applicable, with the necessary changes, also to what are known as "heavy-duty" tyre changers, in which the axis of rotation of the wheel-holder unit is substantially horizontal.

These and other features will become more apparent from the following description of a preferred embodiment, illustrated purely by way of nonlimiting example in the accompanying drawings, in which:

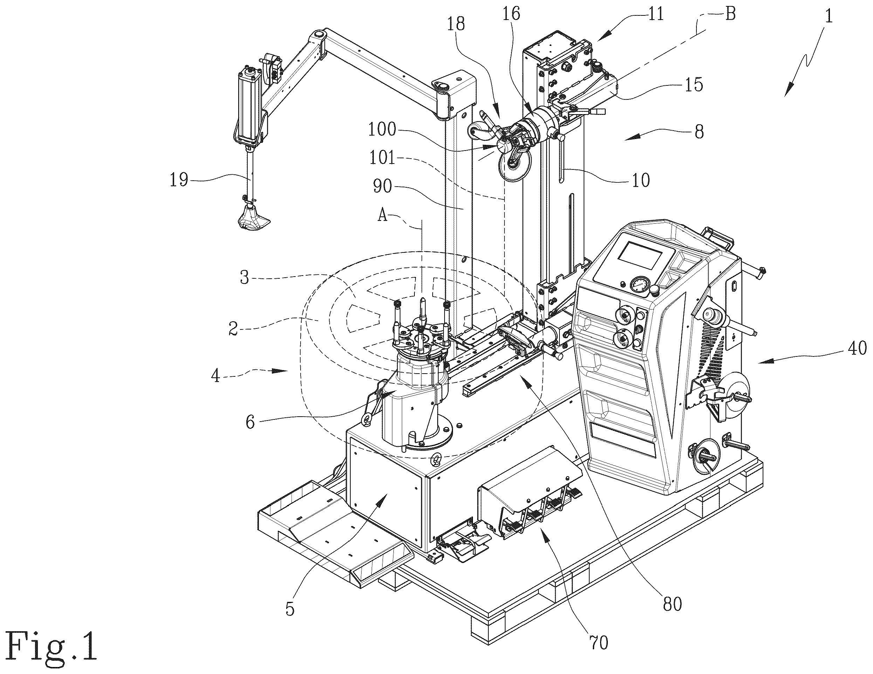

- Figure 1 shows a front perspective view of an apparatus for fitting and removing a tyre;

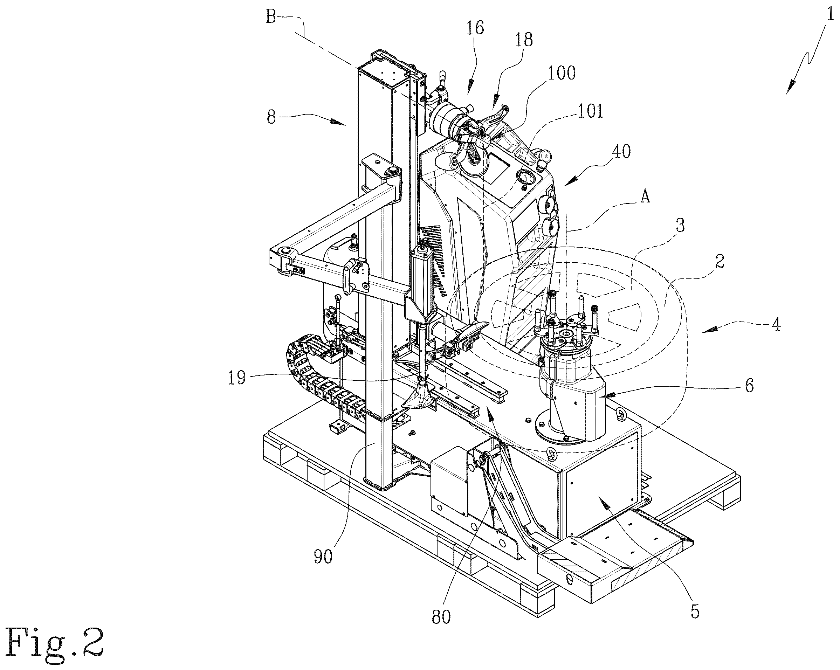

- Figure 2 shows a rear perspective view of the apparatus;

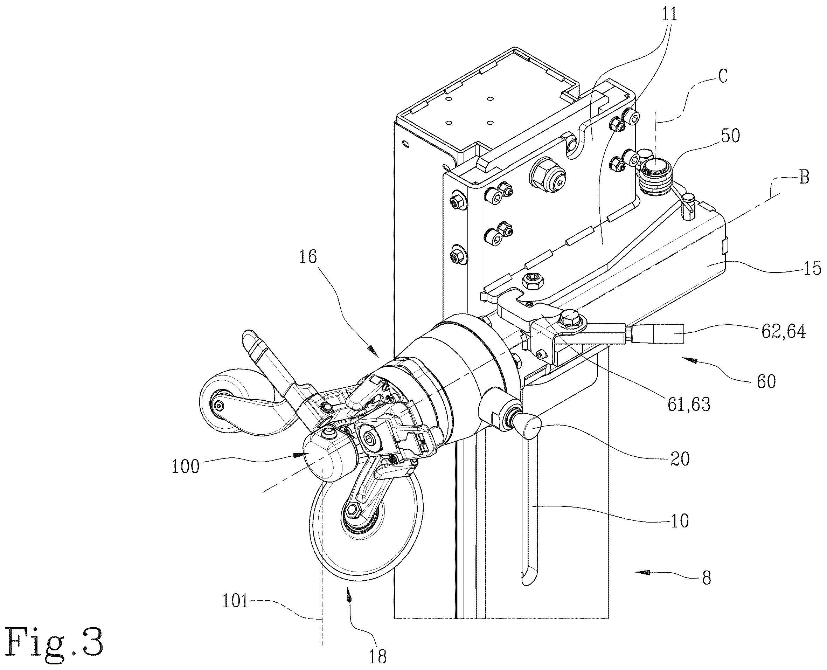

- Figure 3 shows an arm and an operating head which are disposed in an active position;

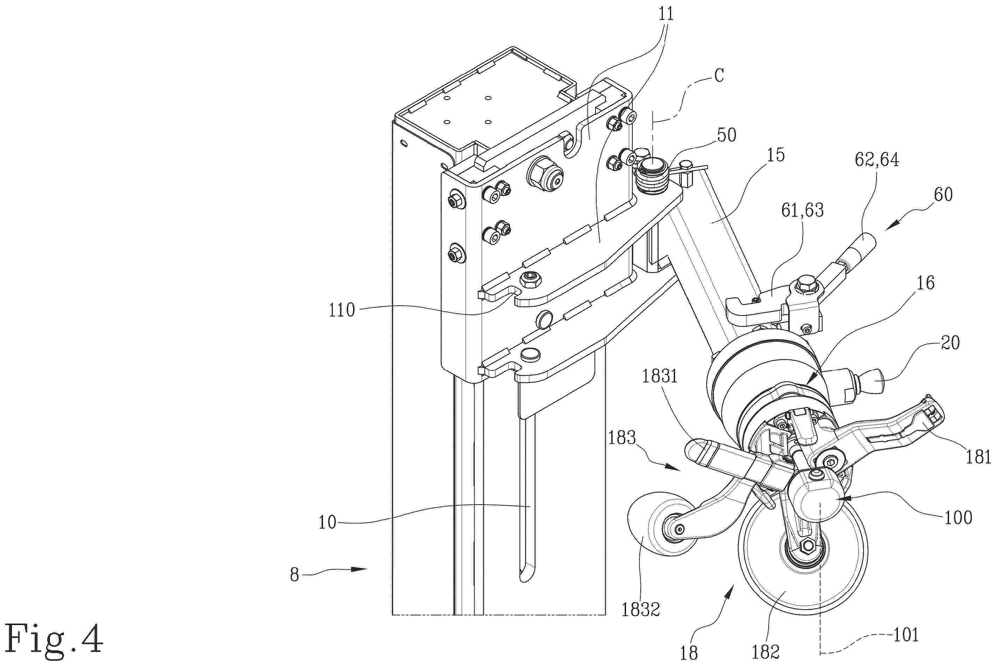

- Figure 4 shows an arm and an operating head which are disposed in an inactive position;

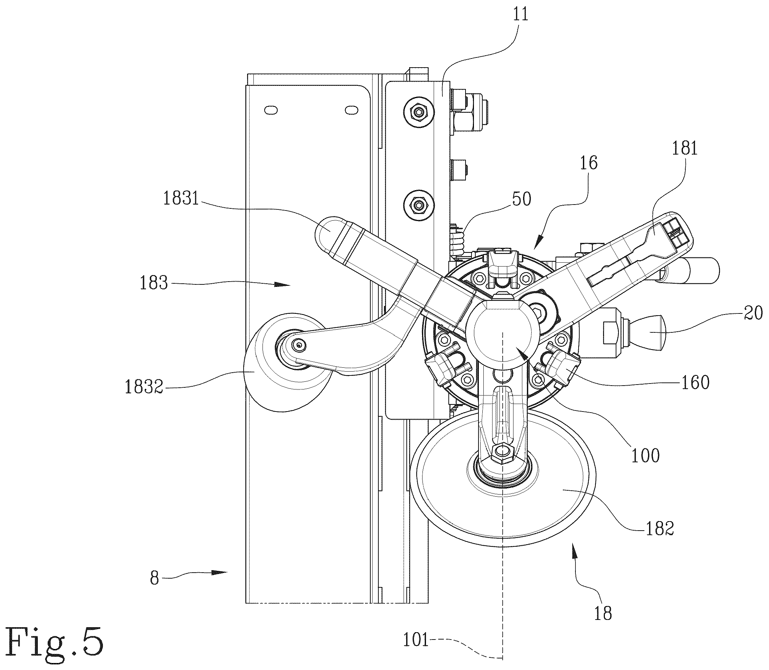

- Figure 5 shows a side view of the operating head;

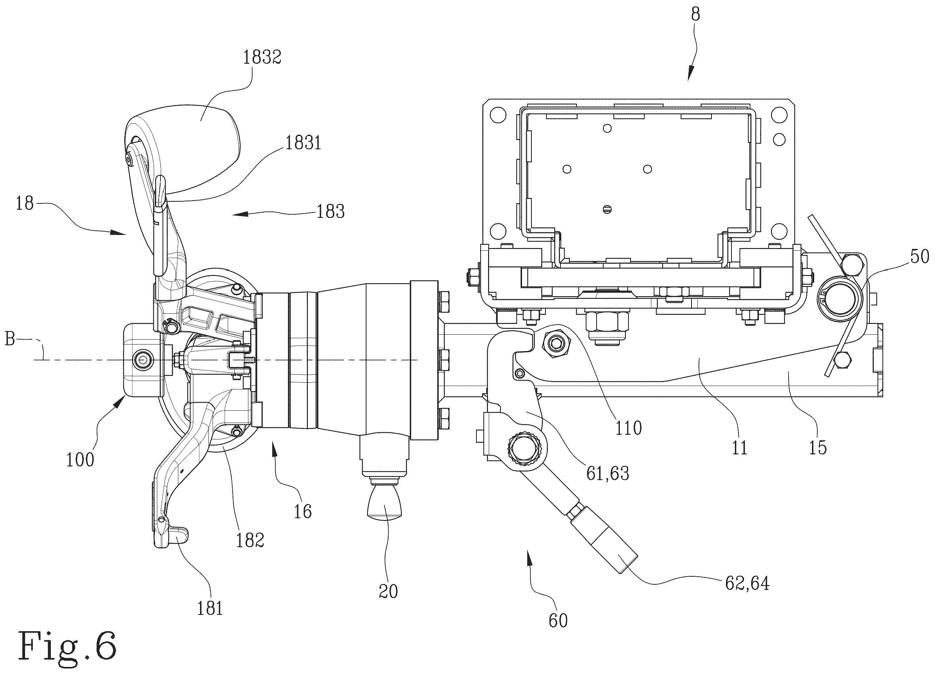

- Figure 6 shows a top view of arm and operating head;

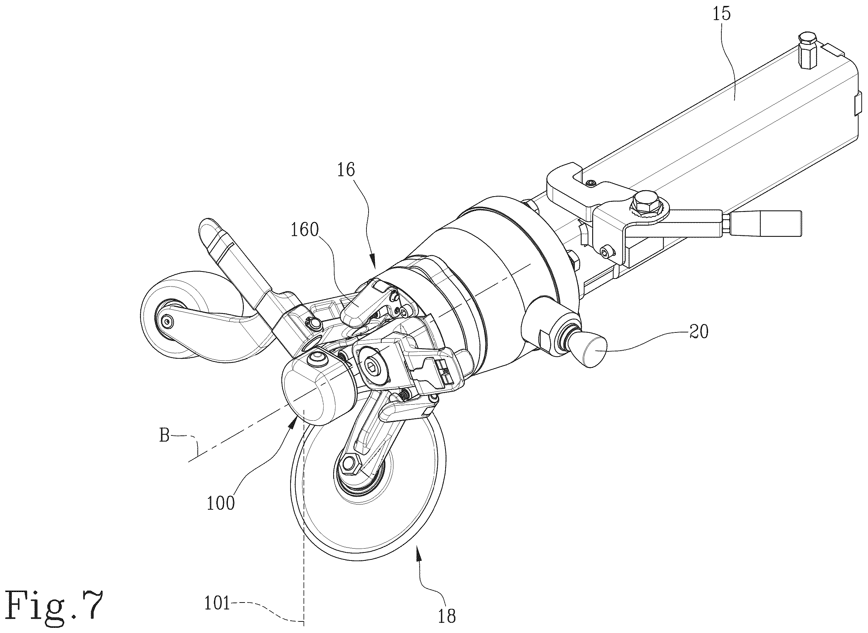

- Figure 7 shows a perspective view of arm and operating head;

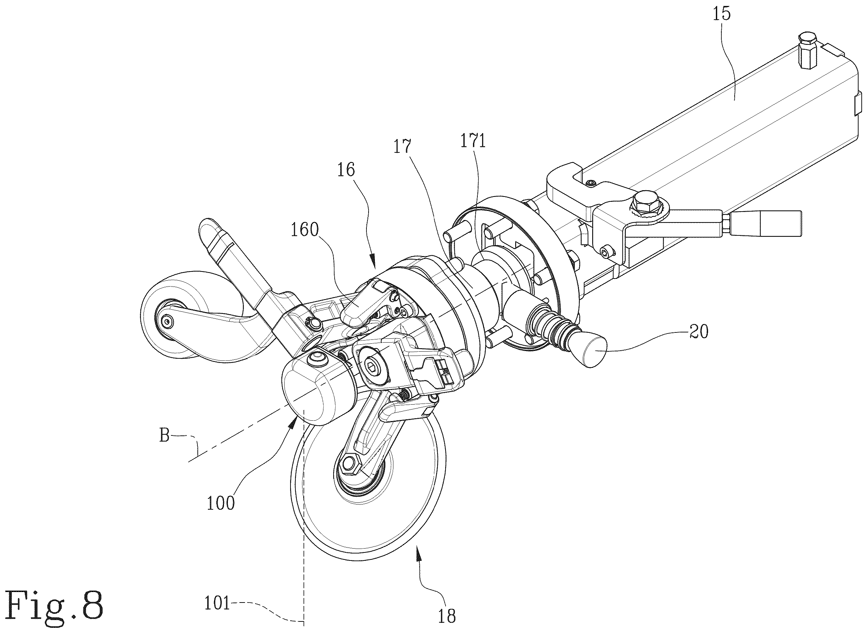

- Figure 8 shows a partial view of arm and operating head;

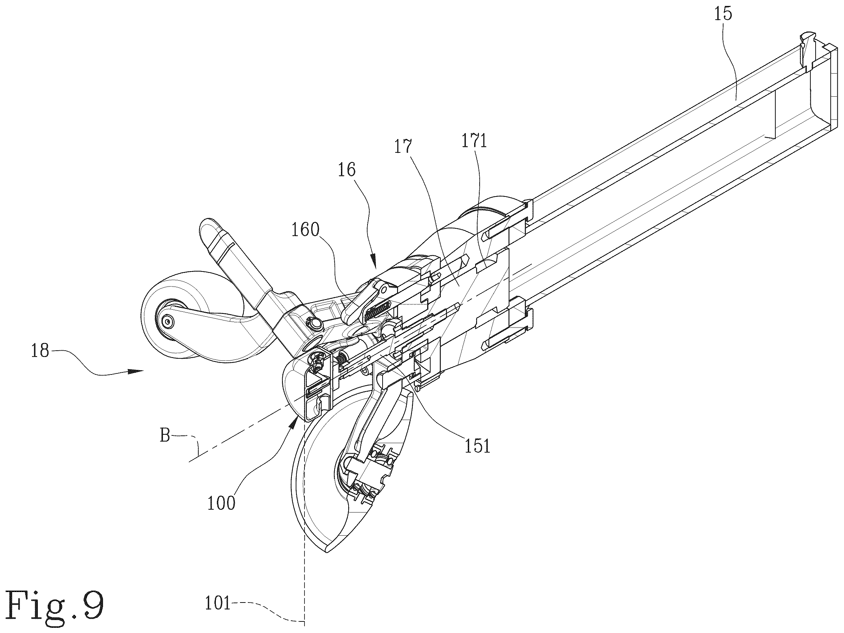

- Figure 9 shows a perspective cross section of arm and operating head;

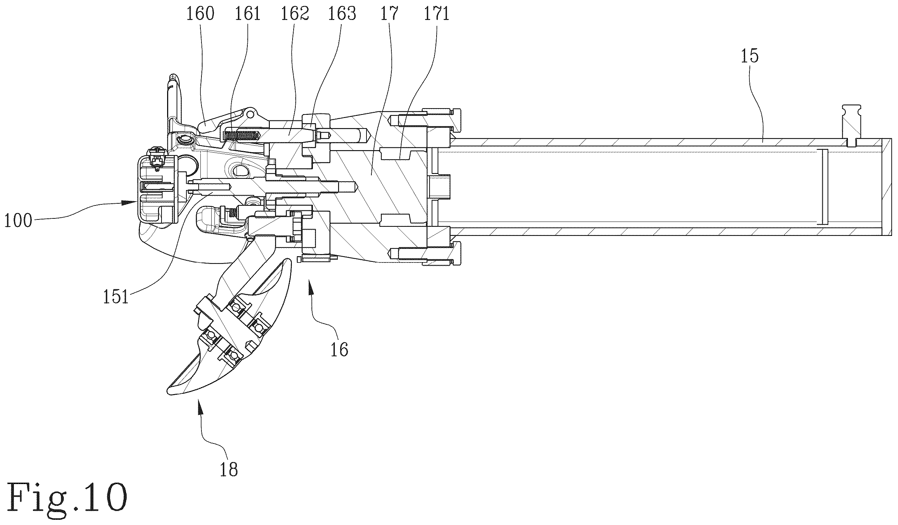

- Figure 10 shows a lateral cross section of arm and operating head;

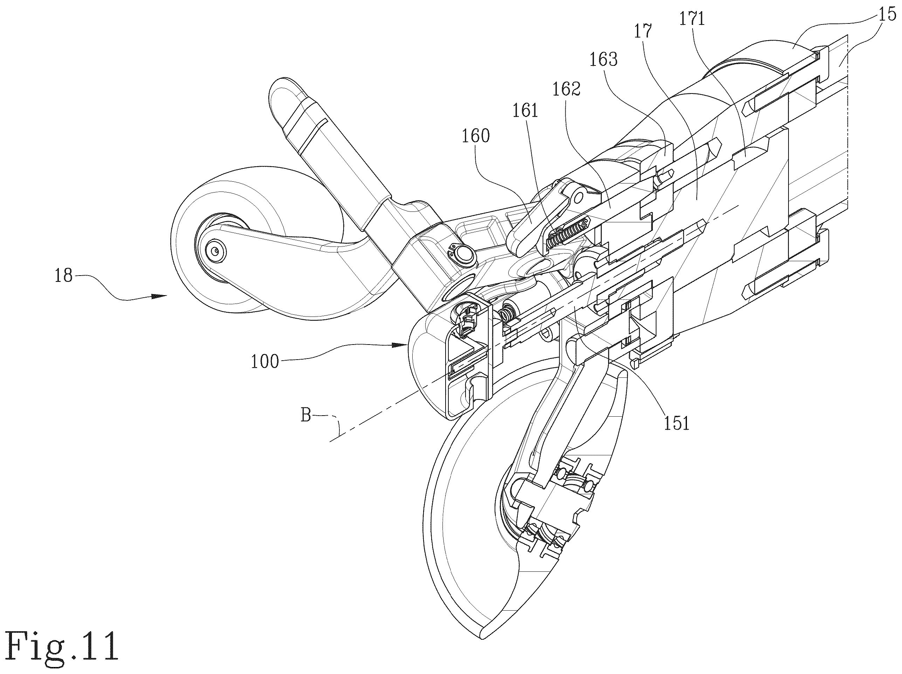

- Figure 11 shows a detail from a perspective cross section of arm and operating head;

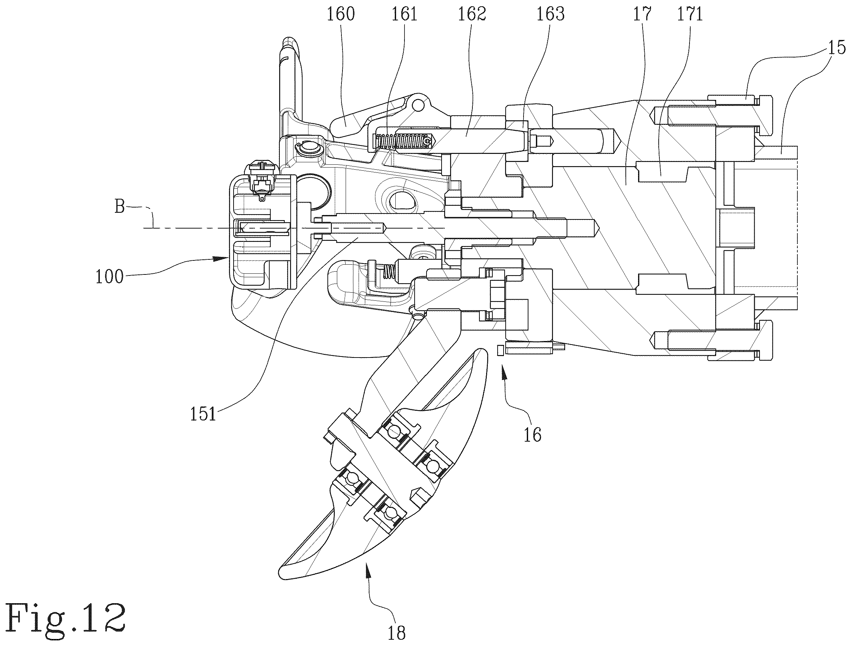

- Figure 12 shows a detail from a lateral cross section of arm and operating head;

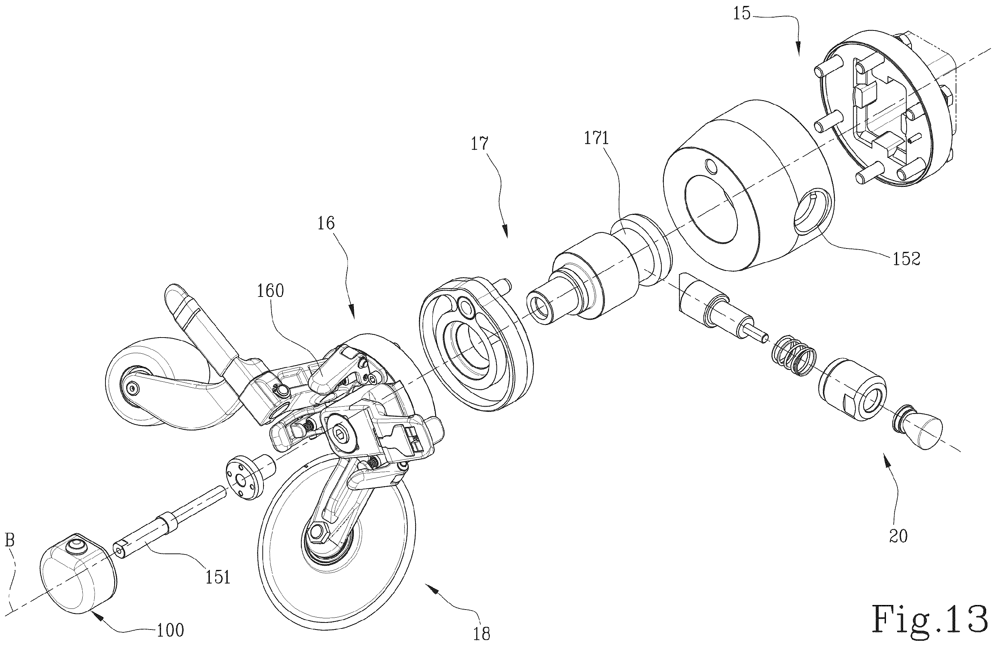

- Figure 13 shows an "exploded" view of the arm and operating head assembly.

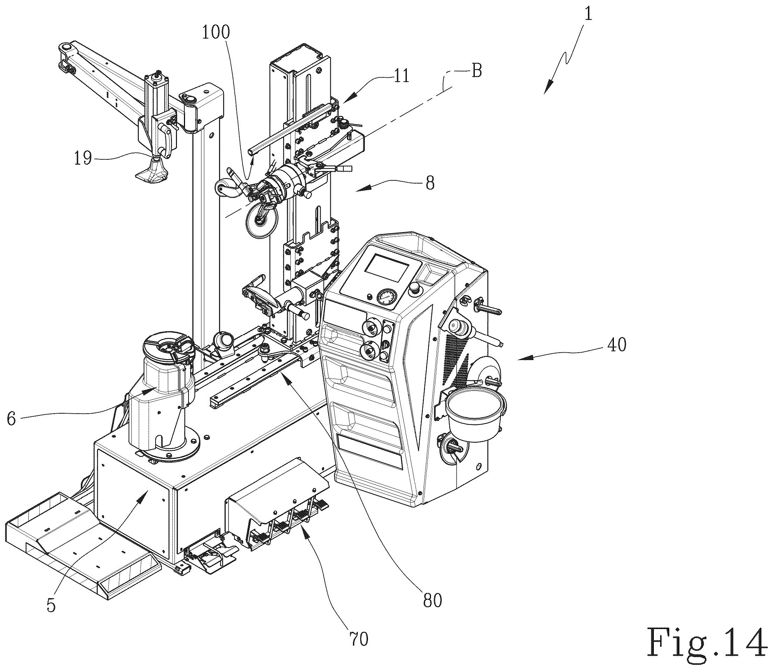

- Figure 14 shows a front perspective view of an apparatus for fitting and removing a tyre according to another embodiment.

The numeral 1 denotes an apparatus according to this disclosure, for fitting and removing a tyre 2 to and from a corresponding rim 3 of a vehicle wheel 4. The apparatus 1 comprises a wheel-holder unit 6, configured to rotate about a first axis A. The first axis A is oriented vertically. The wheel-holder unit 6 is configured to lock the rim 3 of the wheel 4. Further, the wheel-holder unit 6 is configured to rotate about the first axis A so that, during a step of fitting and/or a step of removing, the wheel 4 rotates as one with the wheel-holder unit 6. The apparatus 1 comprises a column 8, provided with a vertical guide 10. The column 8 extends along the vertical direction. The apparatus 1 comprises a carriage 11, coupled to the vertical guide 10 to slide vertically along the vertical guide 10. The apparatus 1 comprises an arm 15. Preferably, the arm 15 has a first end and a second end. The arm is connected to the carriage 11. Preferably, the first end of the arm is connected to the carriage 11. The apparatus 1 comprises an operating head 16, connected to the arm 15. Preferably, the operating head 16 is connected to the second end of the arm 15. The column 8, via the carriage 11, is configured to make the arm 15 slide vertically together with the operating head 16. The operating head 16 is configured to rotate about a second axis B. The second axis B is transversal to the first axis A. The second axis B is parallel to the floor. The operating head 16 is provided with a plurality of tools 18. Each tool 18 is operatively inserted between a bead of the tyre 2 and an annular edge of the rim 3 in a working position.

In an example, the plurality of tools 18 includes a removing tool 181. The removing tool 181 comprises a main body which extends along a main direction. The main direction is radial with respect to the second axis B. The removing tool 181 has a first end, proximal to the second axis B, and a second end, distal to the second axis B. At its second end, the removing tool 181 comprises a hook. This solution allows the removing tool 181 to be operatively inserted between the bead of the tyre 2 and the annular edge of the rim 3 when the removing tool 181 is in the operating work position. In an example, the plurality of tools 18 includes a bead breaker tool 182. The bead breaker tool 182 comprises a rotary disc. The rotary disc is rotatable idly with respect to a main body of the bead breaker tool 182. In an example, the plurality of tools 18 includes a fitting tool 183, configured to facilitate fitting the tyre 2 to the rim 3. In an example, the fitting tool 183 includes a member 1831. Preferably, the fitting tool 183 also includes an additional member 1832. The member 1831 may comprise a lever which extends along a radial direction with respect to the second axis B. Preferably, when the fitting tool 183 is in the working position, the member 1831 is oriented substantially along the vertical direction. Preferably, the additional member 1832 includes a rotary body, rotatably coupled to a supporting arm of its own. When the fitting tool 183 is in the working position, the rotary body is positioned on the sidewall of the tyre, and guides the tyre 2 during the rotation of the rim 3 on the wheel-holder unit 6.

Preferably, therefore, at least part of each of the tools of the plurality of tools 18 is operatively inserted between a bead of the tyre 2 and an annular edge of the rim 3 in a working position.

The tools 18 are alternatively selectable by rotating the operating head 16 about the second axis B in respective operating configurations. In the respective operating configurations, the tools 18 are oriented in the working position. In an example, the tools 18 are oriented towards the wheel 4. The operating head 16 may be rotated manually by a user. The operating head 16 is provided with at least one locking tooth 160. Preferably, the operating head 16 is provided with three locking teeth 160, angularly positioned at 120° around the second axis B, alternately with respect to the position of the tools 18. The locking teeth 160 are configured to be moved manually into a locking position and an unlocking position. The locking teeth 160 are connected to a spring 161. In particular, each locking tooth 160 is connected to a respective spring 161. In the locked position, the locking teeth 160 fix the operating head 16 to the arm 15 (preventing rotation). In the locked position, the spring 161 is unloaded. In the unlocked position, the operating head 16 is fixed to the arm 15 so that it is free to rotate about the second axis B. In the unlocked position, the spring 161 is compressed. Therefore, to select a different tool 18, the user must first bring the locking tooth 160 to the unlocked position and then rotate the operating head 16 until the selected tool is oriented towards the wheel 4. Each spring 161 is connected to a corresponding pin 162. The arm 15 may comprise a housing 163.. The pin 162 is configured to be removably inserted into the housing 163. Preferably, the housing is positioned, with respect to the second axis B, opposite the tool when the tool is in the working position. It should be noted that the pin 162 prevents rotation when it is inserted in the housing 163 of the arm 15. The pin 162 inserted into the housing 163 is the pin corresponding to the selected tool. The expression "corresponding to the selected tool" is used to mean the pin (and the spring and tooth) opposite the tool with respect to the second axis B. To pass from the locked configuration to the unlocked configuration, the user may operate the locking tooth 160 by opening it out, away from the second axis B. When the user opens out the locking tooth 160, the spring 161 is compressed and the pin 162 is made to slide out of the housing 163. That way, the pin 162 no longer interferes with the arm 15 and the operating head 16 is free to rotate with respect to the arm 15.

The apparatus 1 comprises a frame 5. The frame 5 supports the wheel-holder unit 6. In an example, the arm 15 is movably connected to the carriage 11 so that it can be moved between an active position, where the arm 15 is oriented towards the first axis A, and an inactive position, spaced from the active position away from the first axis A. The arm 15 may be hinged to the carriage 11 so it can move between the active position and the inactive position by rotating about a third axis. The third axis C is parallel to the first axis A. Therefore, the rotational movement of the arm 15 is such that the arm 15 moves in a plane which is parallel to the floor. The carriage 11 includes a first portion, connected to the column 8 and configured to slide on the column 8 in the guide 10. The carriage 11 includes a second portion, which extends transversally to the column 8 and to which the arm 15 is hinged. In an example, the second portion is connected to the first portion in such a way that the first and second portions are perpendicular to each other. The apparatus 1 comprises an elastic element 50, connected to the carriage 11 and to the arm 15. The elastic element 50 is configured to force the arm 15 into the inactive position. Preferably, the elastic element 50 is a torsion spring. The torsion spring may be mounted on the hinge so that it extends along the third axis C. The apparatus 1 includes a locking mechanism 60. The locking mechanism 60 is configured for locking the arm 15 in the active position and for unlocking the arm 15 to allow it to move from the active position to the inactive position. When the locking mechanism 60 is unlocked, the force which the elastic element 50 exerts on the arm 15 pushes the arm into the inactive position. When the locking mechanism 60 is locked, it exerts a locking force, which overcomes the force exerted by the elastic element 50, and thus locks the arm 15 in the active position. In an example, the displacement of the arm 15 from the inactive position to the active position is carried out manually by the operator. In an example, the apparatus comprises two locking mechanisms 60. The locking mechanism 60 may comprise a locking member 61. The locking member 61 is movable between a locking position and a releasing position. The locking mechanism 60 may also comprise a manoeuvring member 62. The manoeuvring member 62 is connected to the locking member 61 and allows the user to manually lock and unlock the arm 15. The manoeuvring member 62 may comprise (consist of) a handle 64. The locking member 61 may comprise (consist of) a lever 63. The lever 63 is hinged to the arm 15. The lever 63 has a first end, connected to the locking member 61, and a second end, connected to the manoeuvring member 62. Thus, the arm 15 is locked and unlocked to and from the carriage 11 manually by operating on the manoeuvring member 62 by making the lever 63 rotate about the hinge and hooking the locking member 61 to the carriage 11. The carriage 11 may comprise a cavity 110. The cavity 110 is configured to receive the locking member 61, in the locking configuration. The locking member 61 may consist of a hook. Thus, the hook is configured to be removably inserted into the cavity 110 so as to lock the arm 15 in the active position.

In an example embodiment, the operating head 16 is removably connected to the arm 15. The operating head 16 may include a connecting shaft 17. The connecting shaft 17 can be removably inserted into an opening made in the arm 15. The apparatus 1 may also comprise a fastening pin 20 which can be removably inserted into a through hole 152 in the arm 15 to engage the arm 15 and the connecting shaft 17. That way, when the fastening pin 20 is inserted into the through hole 152, the fastening pin 20 prevents the connecting shaft 17 from moving in translation and in rotation with respect to the arm 15. Consequently, when the fastening pin 20 is inserted into the through hole 152, the operating head 16 is constrained to remain fixed to the arm 15 because the connecting shaft 17 is connected to the operating head 16.

In an example embodiment, the wheel-holder unit 6 protrudes upwardly from the frame 5. The frame 5 has a working side facing a working area. The working area is a space which is occupiable by the user. The column 8 has a working side facing the working area. The vertical guide 10 is positioned at the working side of the column 8. The apparatus 1 also comprises a set of pedals 70 positioned at the working side of the frame 5. Thus, without moving from the working area, the user can operate on the set of pedals 70 and on the operating head 16 quickly and easily. The frame supports the column 8 and is provided with a horizontal guide 80.

The column 8 is slidable in the horizontal guide 80 along a sliding direction. The sliding direction is oriented horizontally. The sliding direction is a direction towards and away from the wheel-holder unit 6. The apparatus may comprise a control panel 40. The control panel has a front face. The front face is configured to interact with the user. The front face is directed towards the working area. Preferably, the control panel 40 is positioned in the working area. The control panel 40 is configured to control the movement of the carriage 11 along the vertical guide 10. It should be noted that, in an example, the operating head 16 (hence the tools 18) may be provided with:
- a vertical sliding movement, since the operating head 16 is supported by the arm 15 which is, in turn, connected to the carriage 11, the vertical sliding movement being a movement along the guide 10 of the column 8;
- a horizontal sliding movement, in a direction towards, and in a direction away from, the wheel 4;
- an open/close movement whereby the operating head 16 can be moved into an inactive position or into an active position.

In an example, the apparatus comprises an illuminator 100, configured to generate a laser beam 101. The illuminator 100 may be connected to the arm 15. Alternatively, the illuminator 100 may be connected to the operating head 16. The laser beam 101 is oriented in a downward direction to illuminate a spot of the wheel 4 mounted on the wheel holder unit 6. After choosing the tool 18 according to the operation to be carried out on the wheel 4, the user can use the control panel to move the operating head vertically and/or away from and/or towards the wheel 4.

The spot on the wheel illuminated by the laser beam 101 serves as a precise indicator for the user, whose aim is to position the tool 18 at the point indicated by the illuminator 100. In an example, the illuminator 100 is connected to the column 8. In another example, the illuminator 100 is connected to the carriage 11. In an example, the illuminator 100 is connected to the carriage 11 or to the column 8 through a further arm. In an example, the further arm extends along a direction that is parallel to the second direction B. In an example, the further arm is provided with a first end connected to carriage 11 or to the column 8 and a second end that supports the illuminator 100. Preferably, the second end is operatively positioned in a position above the operating head 16 or above one of its tools, along the vertical direction. In an example, the illuminator 100 emits a light that is inclined, with respect to the vertical direction. In an example, the illuminator 100 is positioned in a plane that passes through the first axis A and the second axis B, so that, regardless of the operating positions of the tools of the operating head 16, the illuminator 100 is able to illuminate the spot on the tyre 2 or the rim 3. In an example, the illuminator 100 is configured to illuminate the wheel for a predetermined operative time. The predetermined operative time may be a time necessary for the operator to position a tool on the wheel. For that time, the illuminator 100 is in optical contact with the wheel (i.e. lights the wheel with a sign visible to the operator.

In an example embodiment, the arm 15 extends along a transversal direction. The transversal direction may be parallel to the second axis B. The operating head 16 is interposed between the illuminator 100 and the arm 15, along the transversal direction. The operating head 16 may also be provided with a through hole oriented along the second axis B. The illuminator 100 may be connected to the arm 15 by a stem 151. The stem 151 is configured to be positioned in the through hole of the operating head. The operating head 16 is rotatable with respect to the stem 151, while the illuminator 100 is stationary with respect to the rotation of the operating head 16. In an example, the illuminator 100 has a radial size which exceeds the radial size of the through hole of the operating head 16. The illuminator 100 is removably connected to the stem 151. In effect, to remove the operating head 16, it is necessary to first remove the illuminator 100. In an example, the connecting shaft 17 has a first end and a second end. The first end is connected to the arm. The second end is connected rotatably to the operating head 16. The stem 151 is fixed to the second end of the connecting shaft 17. In an example embodiment, the connecting shaft is provided with a seat 171. The seat 171 is oriented radially with respect to the second axis B. The arm 15 comprises the through hole 152. The through hole 152 is oriented radially with respect to the second axis B. The connecting shaft 17 is connected removably to the arm 15. In an example, the connecting shaft 17 is removably connected to the arm 15 in a predetermined relative angular position, so that the through hole 152 of the arm is aligned with the seat 171 of the connecting shaft 17. Preferably, the seat 171 is a groove having a radial depth which extends around the entire circumference of the connecting shaft 17. In an example, the fastening pin 20 is coupled slidably to the arm 15. The fastening pin 20 is removably insertable into the seat 171 of the connecting shaft 17 in order to lock and unlock the connecting shaft 17 with respect to the arm 15. In an example embodiment, the illuminator 100 is coaxial with the second axis B, and is connected to the operating head. Preferably, the illuminator 100 is pivotally connected to the operating head 16 so as to be rotatable with respect to the operating head 16. Alternatively, the illuminator 100 is removably connected to the operating head 16. In this example, the operating head 16 includes a seat. The illuminator 100 is connectable to the seat of the operating head 16 in a plurality of angular positions. The plurality of angular positions is configured so that whatever the angular position of the operating head 16 with respect to the second axis B, the illuminator 100 delivers a laser beam 101 which is always directed downwardly to illuminate a spot on the wheel 4. In a preferred example embodiment, the laser beam 101 is oriented vertically.

In an example, the illuminator includes a pushbutton. The pushbutton is configured to activate the emission of the laser beam 101. Preferably, the laser beam 101 remains active for a predetermined length of time. The apparatus 1 also comprises a control unit. The control unit is connected to the illuminator 100 to set a timed signal, so that the laser beam 101 remains active for the predetermined length of time. At the end of the predetermined length of time, the laser beam 101 is deactivated.

In an example, the illuminator 100 has a substantially cylindrical shape. The cylindrical shape of the illuminator 100 extends predominantly along the second axis B. The pushbutton is located on the lateral surface of the illuminator. Alternatively, the pushbutton is located on the front surface of the illuminator 100, that is, at the front end of the illuminator 100. It should be noted that the body of the illuminator 100 may have different geometrical shapes. In an example, at least part of the lateral surface of the illuminator 100 is flat. The pushbutton is mounted on the flat part of the illuminator 100. Preferably, the flat part is positioned in an upper zone of the illuminator 100, with respect to the vertical direction. In an example, the laser beam, 101 is orthogonal to the lateral surface of the illuminator 100. Preferably, the laser beam 101 is orthogonal to the flat part of the illuminator 100. In an example, the laser beam 101 is oriented radially with respect to the cylindrical extension of the illuminator 100. In an example, the pushbutton is spaced from a point of outlet of the laser beam 101 from the illuminator 100. Preferably, the pushbutton and the outlet point of the laser beam 101 are diametrically opposite each other. In an example, the illuminator 100 is battery powered. Preferably, the battery is a "button battery". When the illuminator is battery-powered, the body of the illuminator is provided with a specific opening to facilitate battery replacement.

In another example embodiment, the operating head 16 is removably connected to the arm 15. Thus, the operating head 16 can be replaced with another, similar operating head or with other tools suitable for working on special kinds of wheels or tyres. The apparatus 1 may include one or more actuators. The one or more actuators are configured for moving the carriage 11 along the vertical guide 10. The actuators may also be configured for moving the column 8 along the horizontal guide 80. The actuators may be hydraulic or electric actuators. The control unit is connected to the actuator and is configured for setting a first sliding speed or a second sliding speed. The second sliding speed is preferably twice the first sliding speed. The passage from the first to the second sliding speed may be automatic; for example, it may be time switched. The control panel 40 comprises one or more control elements which are connected to the control unit. The control elements deliver commands to the control unit for controlling the actuator and selecting the first sliding speed or the second sliding speed. The two-speed control can be applied to both the vertical sliding movement of the carriage 11 along the guide 10, and to the sliding movement of the column 8 towards and away from the wheel 4. In another example, the control unit may be configured for setting a predetermined stroke for the carriage 11. The control elements of the control panel 40 are capable of interacting with the user to deliver commands to the actuator for moving the carriage 11 for the predetermined stroke. Similarly, the predetermined stroke may be a vertical movement of the carriage 11 along the guide 10. Alternatively, the predetermined stroke may be a towards/away movement of the column 8 along the horizontal guide 80.

It should be noted that the features of the illuminator 100 and laser beam 101 described herein are associable both to the embodiment in which the illuminator 100 is connected to the arm 15 and to the embodiment in which the illuminator 100 is connected to the operating head 16.

In an example, the apparatus 1 comprises a further column 90. The further column 90 is separate from the column 8. The apparatus 1 comprises a bead pressing tool 19. The bead pressing tool 19 is operatively in contact with the tyre 2. The bead pressing tool 19 exerts a force on the tyre 2 such that the bead pressing tool 19 rotates as one with the wheel 4. The force which the bead pressing tool 19 exchanges with the tyre 2 has a direction which is parallel to the axis A. The bead pressing tool 19 is connected movably to the further column 90. Preferably, the bead pressing tool 19 extends along the vertical direction. The apparatus 1 comprises a sensor system, configured for detecting the position of the tool 18 which is positioned in the operating configuration. The sensor system is connected to the control unit. The sensor system may include an encoder, capable of generating a signal as a function of the rotation angle of the operating head. Alternatively, the sensor system may consist of a camera, or a magnetic sensor, or any other sensor capable of detecting a relevant angular position. In an example, the sensor system consists of two magnets and two Hall effect sensors. The Hall effect sensors may be angularly spaced by 120°. When a tool is positioned at a predetermined operating position, both of the magnets face the Hall effect sensors. In operating positions other than the predetermined operating position, only one of the two magnets faces a sensor. This solution thus makes it possible to recognize the three operating positions of the three tools. Furthermore, in the intermediate positions, that is, those in which there is no tool is positioned in the operating position, no magnet faces the sensors. That way, the control unit detects a "no tool positioned" condition. It should be noted that this solution allows providing the user with feedback which may, for example, be visual and/or acoustic. Moreover, recognizing the position of the tools may also be useful to increase the safety of the machine, preventing tool movements which could be dangerous under certain circumstances.

In an embodiment, the operating head 16 can be dismantled from the arm 15 and the apparatus 1 includes the sensor system. In this or other embodiments, the coupling between the operating head 16 and the arm 15 is such as to ensure coupling at a specific angular position. This is necessary to avoid losing the calibration of the sensor system when the sensor system has an absolute reference.

## Claims

1. An apparatus (1) for fitting and removing a tyre (2) to and from a corresponding rim (3) of a wheel (4) for a vehicle, comprising:
- a wheel-holder unit (6) rotating about a first axis (A) which is vertically oriented;
- a column (8), having a vertical guide (10);
- a carriage (11), coupled to the vertical guide (10) to slide vertically;
- an arm (15) connected to the carriage (11);
- an operating head (16), pivotally connected to the arm (15), to rotate around a second axis (B), transversal to the first axis (A), and provided with a plurality of tools (18), each tool being operatively inserted between a bead of the tyre (2) and an annular edge of the rim (3) in a working position, the tools (18) being alternatively selectable by rotating the operating head (16) in respective operating configurations in which the tools (18) are oriented towards the wheel (4) to be positioned in the working position, the operating head (16) and the wheel-holder unit (6) being mutually movable relative to a longitudinal axis which is perpendicular to the first axis (A),
**characterized in that** the apparatus (1) comprises an illuminator (100), configured for generating a laser beam (101), the illuminator (100) being connected to the arm (15) or to the operating head (16) so that the laser beam (101) is oriented in a downward direction, for illuminating a spot of the wheel (4) mounted on the wheel holder unit (6).

2. The apparatus (1) according to claim 1, wherein the arm (15) extends along a transversal direction, parallel to the second axis (B), and wherein the operating head (16) is interposed between the illuminator (100) and the arm (15), along the transversal direction.

3. The apparatus (1) according to claim 2, wherein the operating head (16) is provided with a through hole oriented along the second axis (B) and the illuminator (100) is connected to the arm (15) by a stem (151) positioned in the through hole, whereby the operating head (16) is rotatable with respect to the stem (151) and the illuminator (100) is stationary with respect to the rotation of the operating head (16).

4. The apparatus (1) according to claim 3, wherein, with respect to the second axis (B), the illuminator (100) has a radial size exceeding the radial size of the through hole, and wherein the illuminator (100) is removably connected to the stem (151).

5. The apparatus (1) according to claim 4, comprising a connecting shaft (17) having a first end connected to the arm (15) and a second end rotatably connected to the operating head (16), wherein the stem (151) is fixed to the second end of the connecting shaft (17).

6. The apparatus (1) according to claim 5, wherein:
the connecting shaft (17) is provided with a seat (171) oriented radially with respect to the second axis (B),
the arm (15) is provided with a through hole (152), oriented radially with respect to the second axis (B),
the connecting shaft (17) is removably connectable to the arm (15) in a predetermined relative angular position, so that the through hole (152) of the arm (15) is aligned with the seat (171) of the connecting shaft (17),
the apparatus (1) comprises a fastening pin (20), slidably coupled to the through hole (152) of the arm (15) so that it is removably insertable in the seat (171) of the connecting shaft (17), for locking and unlocking the connecting shaft (17) with respect to the arm (15).

7. The apparatus (1) according to claim 1 or 2, wherein the illuminator (100) is positioned coaxially with respect to the second axis (B) and is connected to the operating head (16) so that either of the following condition is met:
i) the illuminator (100) is removably connected to the operating head (16), and the operating head (16) includes a slot, the illuminator (100) being connectable to the slot in a plurality of angular positions;
ii) the illuminator (100) is pivotally connected to the operating head (16), so that the illuminator (100) can be rotated with respect to the operating head (16).

8. The apparatus (1) according to any of the preceding claims, wherein the operating head (16) is removably connected to the arm (15).

9. The apparatus (1) according to any of the preceding claims, comprising:
- one or more actuators, for moving the carriage (11) along the vertical guide (10);
- a control unit, connected to the actuator and configured for setting a first sliding speed or a second sliding speed of the carriage (11);
- a control panel (40), including one or more control elements connected to the control unit to deliver commands thereto, the control elements being configured to interact with a user so that the user can deliver commands for the actuator and select the first sliding speed or the second sliding speed.

10. The apparatus (1) according to any of the preceding claims, comprising:
- one or more actuators, for moving the carriage (11) along the vertical guide (10);
- a control unit, connected to the actuator and configured for setting a predetermined stroke for the carriage (11);
- a control panel (40), including one or more control elements connected to the control unit to deliver commands thereto, the control elements being configured to interact with a user so that the user can deliver commands for the actuator and move the carriage (11) for the predetermined stroke.

11. The apparatus (1) according to any of the preceding claims, comprising:
- a further column (90), separate from the column (8);
- a bead pressing tool (19), configured to be operatively in contact with the wheel (4), so that the bead pressing tool (19) is adapted to rotate as one with the wheel while exerting a force on the tyre (2) parallel to the first axis (A), wherein the bead pressing tool (19) is connected to the further column (90).

12. The apparatus (1) according to any of the preceding claims, comprising a sensor system, configured for detecting the tool of the plurality of tools (18) that is positioned in the operating configuration.

13. A method for fitting and removing a tyre (2) to and from a corresponding rim (3) of a wheel (4) for a vehicle, comprising the following steps:
- providing a wheel-holder unit (6) rotatable about a first axis (A) which is vertically oriented;
- locking the wheel (4) on the wheel holder unit (6);
- providing a column (8), having a vertical guide (10), with a carriage (11) slidably coupled thereto and an arm (15) connected to the carriage (11);
- providing an operating head (16), connected to the arm (15), rotatable around a second axis (B) transversal to the first axis (A), the operating head (16) including a plurality of tools (18);
- by rotating the operating head (16) about the second axis (B), selecting one of the tools of the plurality of tools (18);
- through a vertical movement of the arm (15), inserting the selected tool between a bead of the tyre (2) and an annular edge of the rim (3) in a working position;
- by rotating the wheel holder unit (6) about the first axis (A), fitting the tyre (2) to the rim (3) or removing the tyre (2) from the rim (3),
**characterized in that** the method further comprises the following steps:
- providing an illuminator (100), for generating a laser beam (101) and connected to the operating head (16) or to the arm (15);
- providing the illuminator (100) so that the laser beam (101) is oriented in a direction parallel to the first axis (A) and downwardly, for illuminating a spot of the wheel (4) mounted on the wheel holder unit (6);
- by using the laser beam (101) as a reference on the tyre (2), positioning the selected tool in the working position.

14. The method according to claim 13, including a step wherein the illuminator (100) is removably connected to the arm (15), so that the operating head (16) can be rotated for selecting the tool without rotating the illuminator (100).

15. The method according to claim 13 or 14, wherein the arm (15) is hinged to the carriage (11), to move with respect to the carriage (11) between an active position, wherein the arm (15) is oriented towards the first axis (A), and an inactive positions, displaced away from the active position, and wherein the method comprises a step of moving the arm (15) between the active position and the inactive position.
